# EUROPEAN PATENT APPLICATION

(11) **EP 4 654 381 A1**
(43) Date of publication of application: **26.11.2025**
(21) Application number: 24744524.0
(22) Date of filing: 09.01.2024
(51) Int. Cl.: H01Q 1/52, H01Q 21/30

(54) **ANTENNA DEVICE AND COMMUNICATION DEVICE**

(30) Priority: 18.01.2023 JP 2023005975
(71) Applicant: Sony Group Corporation, Tokyo 108-0075 (JP)
(72) Inventor: KOBAYASHI, Tomoo, Tokyo 108-0075 (JP)
(74) Representative: D Young & Co LLP
(86) International application number: PCT/JP2024/000099
(87) International publication number: WO 2024/154601

(57) **Abstract**

An antenna device includes: a first antenna used for communication in a first frequency band; a second antenna that is arranged close to the first antenna and used for communication in a second frequency band; a first line that is directly or indirectly connected to the first antenna and increases an impedance of the second frequency band at a feeding point of the first antenna more than an impedance of the first frequency band at a feeding point of the first antenna; and a first antenna duplexer or a first filter connected to the first antenna via the first line.

## Description

### Field

The present disclosure relates to an antenna device and a communication device.

### Background

Radio communication technologies are being actively developed. Recent communication devices (antenna devices) can support various types of radio communication (for example, radio communication of various communication schemes or radio communication in various frequency bands).

### Citation List

### Patent Literature

Patent Literature 1: JP 2022-095953 A
Patent Literature 2: JP 2007-174018 A

### Summary

### Technical Problem

In order to support various types of radio communication, the communication device (antenna device) may include a plurality of antennas. However, when a plurality of antennas having close use bands is arranged close to each other in the device, the plurality of antennas interferes with each other. In this case, the communication device (antenna device) cannot exhibit high antenna performance (for example, a high antenna gain, a high antenna efficiency, a high directional characteristic, a low noise level, or the like).

Therefore, the present disclosure proposes an antenna device and a communication device having high antenna performance.

Note that the above problem or object is merely one of a plurality of problems or objects that can be solved or achieved by a plurality of embodiments disclosed in the present specification.

### Solution to Problem

In order to solve the above problem, an antenna device according to one embodiment of the present disclosure includes: a first antenna used for communication in a first frequency band; a second antenna that is arranged close to the first antenna and used for communication in a second frequency band; a first line that is directly or indirectly connected to the first antenna and increases an impedance of the second frequency band at a feeding point of the first antenna more than an impedance of the first frequency band at a feeding point of the first antenna; and a first antenna duplexer or a first filter connected to the first antenna via the first line.

### Brief Description of Drawings

FIG. 1 is a diagram illustrating a state in which two antennas having close use bands are arranged close to each other.
FIG. 2 is a diagram illustrating an antenna device of the present embodiment.
FIG. 3 is a diagram illustrating a configuration example of the antenna device according to the present embodiment.
FIG. 4 is a diagram illustrating a state in which two antennas are arranged in a housing.
FIG. 5 is a view illustrating a configuration example of an antenna.
FIG. 6 is a cross-sectional view taken along line A-A illustrated in FIG. 5.
FIG. 7 is a diagram illustrating a configuration example of a terminal device according to the embodiment of the present disclosure.
FIG. 8 is a diagram illustrating a configuration example of a base station according to the embodiment of the present disclosure.
FIG. 9 is a diagram illustrating a configuration of an antenna device used for a first simulation.
FIG. 10 is a diagram illustrating a configuration of an antenna matching circuit used in the first simulation.
FIG. 11 is a diagram illustrating a result of the first simulation.
FIG. 12 is a diagram illustrating a result of the first simulation.
FIG. 13 is a diagram illustrating a configuration of the antenna device of the present embodiment used in a second simulation.
FIG. 14 is a diagram illustrating a simulation model used for the second simulation.
FIG. 15 is a diagram illustrating an impedance at a feeding point of a first antenna in a case where a microstrip line is 0 mm.
FIG. 16 is a diagram illustrating an impedance at the feeding point of the first antenna in a case where the microstrip line is 26 mm.
FIG. 17 is a diagram illustrating a result of a simulation of antenna efficiency of a second antenna.
FIG. 18 is a diagram illustrating a modification of the antenna device.
FIG. 19 is a diagram illustrating a modification of the antenna device.
FIG. 20 is a diagram illustrating a modification of the antenna device.
FIG. 21 is a diagram illustrating a modification of the antenna device.
FIG. 22 is a diagram illustrating a modification of the antenna device.

### Description of Embodiments

Hereinafter, embodiments of the present disclosure will be described in detail with reference to the drawings. Note that, in each of the following embodiments, the same parts are denoted by the same reference numerals, and redundant description will be omitted.

In addition, in the present specification and the drawings, a plurality of components having substantially the same functional configuration may be distinguished by attaching different numbers or alphabets after the same reference numeral. For example, a plurality of configurations having substantially the same functional configuration may be distinguished as antennas 11a and 11b as necessary. However, in a case where it is not particularly necessary to distinguish each of a plurality of components having substantially the same functional configuration, only the same reference numeral is attached. For example, in a case where it is not necessary to particularly distinguish the antennas 11a and 11b, the antennas are simply referred to as antennas 11.

One or more embodiments (including examples and modifications) described below can each be implemented independently. Meanwhile, at least some of the plurality of embodiments described below may be appropriately combined and implemented with at least some of other embodiments. The plurality of embodiments can include novel features different from each other. Therefore, the plurality of embodiments can contribute to solving different objects or problems, and can exhibit different effects.

### <<1. Outline>>

First, an outline of the present embodiment will be described. Note that, in the following description, a communication device may be referred to as an antenna device. The description of the antenna device in the following description can be replaced with the communication device.

Radio communication technologies are being actively developed. Recent antenna devices can support various types of radio communication. For example, the recent antenna devices can support various radio communication schemes such as long term evolution (LTE), new radio (NR), Wi-Fi, and Bluetooth (registered trademark). In addition, the recent antenna devices can support radio communication in various frequency bands such as an LTE frequency band (LTE frequency band), an NR frequency range 1 (FR1), an NR frequency range 2 (FR2), a Bluetooth 2.4 GHz band, and a Wi-Fi 2.4 GHz/5 GHz band.

LTE and NR are a type of cellular communication technology, and enable mobile communication of a terminal device by arranging a plurality of areas covered by a base station, in a cell shape. Note that, in the following description, "LTE" includes LTE-Advanced (LTE-A), LTE-Advanced Pro (LTE-A Pro), and an Evolved Universal Terrestrial Radio Access (EUTRA). In addition, NR includes New Radio Access Technology (NRAT) and Further EUTRA (FEUTRA).

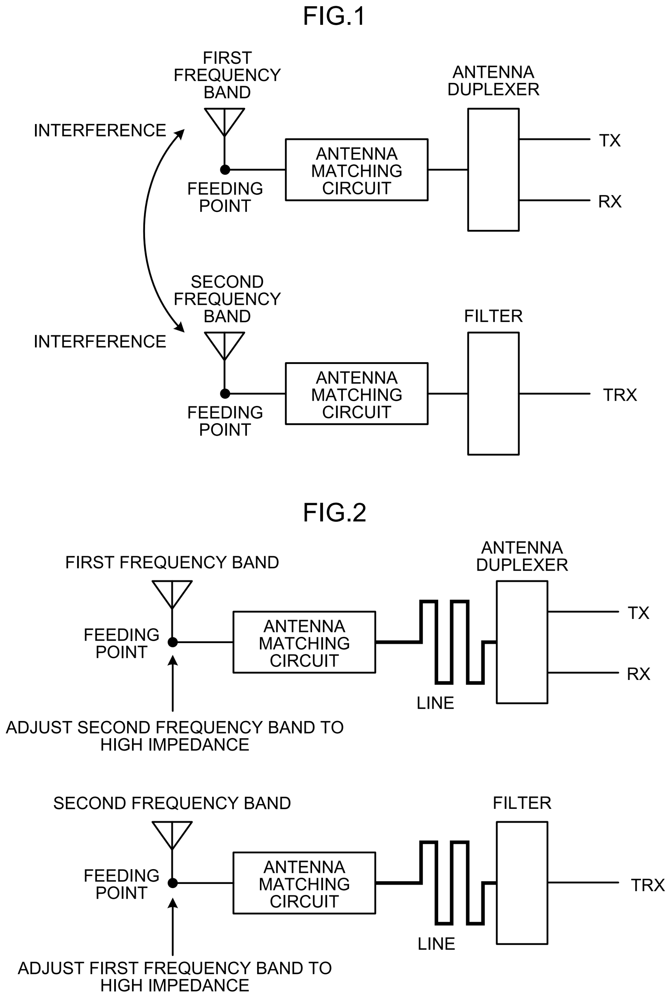

In order to support various types of radio communication, the antenna device may include a plurality of antennas. In order to downsize the device, it is desirable to arrange the plurality of antennas close to each other in the device. FIG. 1 is a diagram illustrating a state in which two antennas having close use bands are arranged close to each other. In an example of FIG. 1, a first antenna used for communication in a first frequency band (for example, Band 1 (B1) of LTE) and a second antenna used for communication in a second frequency band (for example, Bluetooth/Wi-Fi 2.4 GHz band) are arranged close to each other in, for example, a housing of the antenna device.

Note that a single antenna can support a plurality of types of radio communication. However, if the antenna device does not include a plurality of antennas, inconvenience may occur. For example, a case is assumed where a user listens to music with a wireless earphone while keeping a housing such as a smartphone in a pocket. In this case, regarding communication for wireless earphones (for example, Bluetooth communication), the antenna device needs to control the directivity of the antenna in the direction of the user's ear. On the other hand, regarding cellular communication (for example, LTE communication), the antenna device needs to control the directivity of the antenna in the direction of a base station. Accordingly, if the antennas are not separately provided, in some cases, the directivity of the antenna may be poorly controlled, resulting in discontinuous music. Therefore, for example, when directivity needs to be controlled in different directions, it is desirable to separately provide the antennas.

In the example of FIG. 1, the two antennas each include an antenna matching circuit and an antenna duplexer/filter. The two antennas are connected to subsequent circuits (for example, a processing circuit for a transmission signal or a reception signal) via these circuits. Here, the antenna matching circuit is, for example, a parallel resonance circuit including an inductor and a capacitor. In addition, the filter is, for example, a surface acoustic wave (SAW) filter. The antenna duplexer and the SAW filter have a higher Q value (sharpness) than the antenna matching circuit using the inductor and the condenser.

When the plurality of antennas having close use bands is arranged close to each other in the device, the plurality of antennas interferes with each other. For example, a radio wave in a second frequency band entering from the first antenna is absorbed/reflected by the subsequent circuit of the first antenna, and a radio wave in a first frequency band entering from the second antenna is absorbed/reflected by the subsequent circuit of the second antenna, thereby the two antennas interfere with each other. Therefore, antenna characteristics of the two antennas are deteriorated.

In order to prevent deterioration, it is necessary to increase the impedance of the counterpart band of the own antenna to suppress entry of the radio wave in the counterpart band into the circuit. For example, in order to prevent deterioration of the antenna characteristic of the first antenna, it is necessary to increase the impedance of the first frequency band of the second antenna. In addition, in order to prevent deterioration of the antenna characteristic of the second antenna, it is necessary to increase the impedance of the second frequency band of the first antenna.

However, the antenna matching circuit using the inductor and the condenser has a low Q value. Therefore, it is difficult to sufficiently increase the impedance of the counterpart band by adjusting the antenna matching circuit. As a result, the antenna device cannot exhibit high antenna performance (for example, a high antenna gain, a high antenna efficiency, a high directional characteristic, a low noise level, or the like). In order for the antenna device to exhibit high antenna performance, it is necessary to increase the distance between the plurality of antennas. However, in this case, the device design is affected, for example, downsizing of the device becomes difficult.

Therefore, the present embodiment solves the above problem as follows.

FIG. 2 is a diagram illustrating an antenna device of the present embodiment. The antenna device of the present embodiment includes a first antenna used for communication in a first frequency band, and a second antenna arranged close to the first antenna and used for communication in a second frequency band. Here, the close arrangement means that, for example, a plurality of antennas is arranged at a distance of 100 mm or less. An antenna matching circuit having a low Q value and an antenna duplexer/filter having a high Q value are connected to a subsequent stage of each of two antennas. Specifically, the antenna matching circuit and the antenna duplexer are connected to a subsequent stage of the first antenna. In addition, the antenna matching circuit and the filter (for example, the SAW filter) are connected to a subsequent stage of the second antenna.

In the antenna device of the present embodiment, a line is provided between the antenna matching circuit and the antenna duplexer/filter. For example, a line (also referred to as a first line) is provided between the antenna matching circuit and the antenna duplexer which are at the subsequent stage of the first antenna, and a line (also referred to as a second line) is provided between the antenna matching circuit and the filter which are at the subsequent stage of the second antenna. The line is, for example, a strip line (SL) or a micro strip line (MSL).

In the present embodiment, by adjusting the length of the line, the impedance of the counterpart band at a feeding point of the own antenna is increased. For example, in the present embodiment, by adjusting the length of the first line, the impedance of the second frequency band at the feeding point of the first antenna is increased more than the impedance of the first frequency band at the feeding point of the first antenna. In addition, in the present embodiment, by adjusting the length of the second line, the impedance of the first frequency band at the feeding point of the second antenna is increased more than the impedance of the second frequency band at the feeding point of the second antenna.

Note that the first line may be a line having a length that makes the impedance of the second frequency band at the feeding point of the first antenna four times or more (desirably six times or more) the impedance of the first frequency band at the feeding point of the first antenna. At this time, the length of the first line may be a length of -100% to +200% of the 1/4 wavelength of the radio wave in the second frequency band.

In addition, the second line may be a line having a length that makes the impedance of the first frequency band at the feeding point of the second antenna four times or more (desirably six times or more) the impedance of the second frequency band at the feeding point of the second antenna. At this time, the length of the second line may be a length of -100% to +200% of the 1/4 wavelength of the radio wave in the first frequency band.

By adjusting the line length, the impedance of the counterpart band at the feeding point of the own antenna increases. Therefore, interference between the antennas is suppressed, so that deterioration of antenna characteristics is alleviated. As a result, the antenna device can exhibit high antenna performance.

### <<2. Device Configuration>>

Although the outline of the present embodiment has been described above, the configuration of the antenna device of the present embodiment will be described in detail below. First, a configuration of an antenna device 10, which is a basic form, will be described. Thereafter, a configuration of a communication device having features similar to those of the antenna device 10 of the present embodiment will be described. In the present embodiment, configurations of a terminal device 20 and a base station 30 will be described as the communication device. Note that the communication device is not limited to the terminal device 20 and the base station 30.

### <2-1. Configuration example of antenna device>

First, the configuration of the antenna device 10, which is a basic form, will be described.

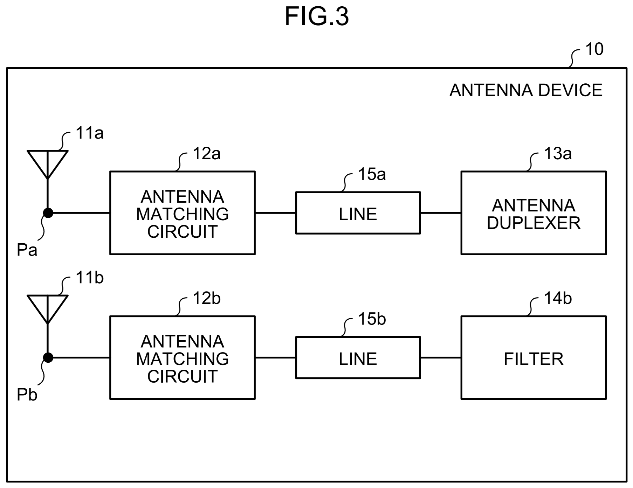

FIG. 3 is a diagram illustrating a configuration example of the antenna device 10 according to the present embodiment. The antenna device 10 is a communication device having a radio communication function. Alternatively, the antenna device 10 is an antenna unit mounted on the communication device.

As illustrated in FIG. 3, the antenna device 10 includes antennas 11 (antennas 11a and 11b), antenna matching circuits 12 (antenna matching circuits 12a and 12b), an antenna duplexer 13a, a filter 14b, and lines 15 (lines 15a and 15b). Note that the configuration illustrated in FIG. 3 is a functional configuration, and the hardware configuration may be different from the functional configuration. Furthermore, the functions of the antenna device 10 may be statically or dynamically distributed and implemented in a plurality of physically separated configurations.

The antenna 11 is an antenna device (antenna unit) that mutually converts a current and a radio wave. As the antenna 11, various types of antennas can be adopted. For example, the antenna 11 may be a linear antenna or a planar antenna. As the linear antenna, a dipole antenna, a monopole antenna, an inverted-L antenna (ILA), and a loop antenna are assumed. As the planar antenna, a patch antenna and a planar inverted-F antenna (PIFA) are assumed. In addition, the antenna 11 may be a chip antenna or a pattern antenna. Of course, the antenna 11 may be an antenna of a type other than these.

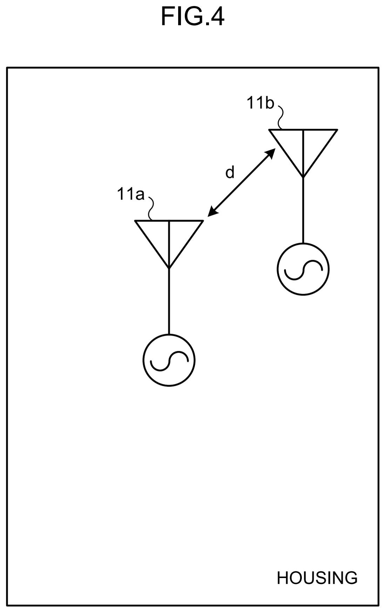

The antenna device 10 of the present embodiment includes at least two antennas 11 (antennas 11a and 11b). Each of the antennas 11a and 11b is arranged in a housing of the antenna device 10 (alternatively, in a housing of a device (for example, a terminal device) including the antenna device 10 as a radio communication unit). FIG. 4 is a diagram illustrating a state in which the two antennas are arranged in the housing. The two antennas 11 (antennas 11a and 11b) are arranged close to each other in the housing. Here, the close arrangement means that, for example, a plurality of antennas is arranged at a distance of 100 mm or less. Arranging a plurality of antennas at a distance of 50 mm or less, 20 mm or less, or 10 mm or less may be regarded as the close arrangement. In an example of FIG. 4, a distance d between the two antennas 11a and 11b is, for example, 1 mm to 100 mm.

The antenna 11 may include one antenna element or a plurality of antenna elements. In a case where the antenna 11 includes a plurality of antenna elements, the antenna device 10 may be configured to generate a directional beam by controlling the directivity of a radio signal using the plurality of antenna elements.

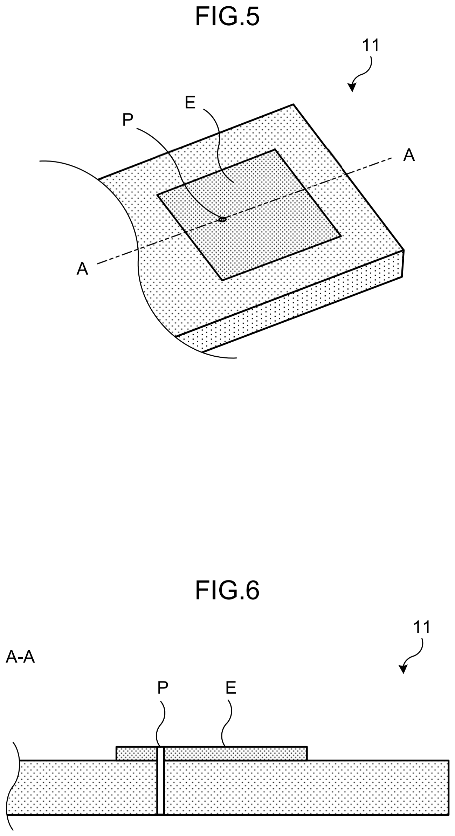

FIG. 5 is a view illustrating a configuration example of the antenna 11. FIG. 5 illustrates an array antenna using a patch antenna as the antenna element. In an example of FIG. 5, only a part of the antenna 11 is illustrated. The patch antenna is a rectangular microstrip antenna. The patch antenna includes an antenna element (patch) arranged on a dielectric substrate having a ground plane on a back surface.

FIG. 5 illustrates an arrangement example of a feeding point P. The feeding point P is a feeding position of the antenna element (patch). FIG. 6 is a cross-sectional view taken along line A-A illustrated in FIG. 5. The antenna device 10 may feed the patch from behind the patch antenna, as illustrated in FIG. 6. Note that the feeding method is not limited to the method illustrated in FIG. 6, and other methods may be used. In addition, in the example of FIG. 5, one feeding point is arranged in one antenna element (patch), but a plurality of feeding points may be arranged in one antenna element (patch).

The two antennas 11 (antennas 11a and 11b) are used for communication of different communication schemes. Here, it is assumed that one of the two antennas 11 (for example, antenna 11a) is a first antenna used for communication in the first frequency band, and the other one (for example, antenna 11b) is a second antenna used for communication in the second frequency band. At this time, one of the communication in the first frequency band and the communication in the second frequency band (for example, communication in the first frequency band) may be LTE and/or NR communication. The other one (for example, communication in the second frequency band) may be Bluetooth and/or Wi-Fi communication.

Note that the communication scheme supported by the antenna device 10 is not limited to LTE, NR, Wi-Fi, and Bluetooth. For example, the antenna device 10 may support 6G. Here, 6G is a type of cellular communication technology, and enables mobile communication of the antenna device (or a terminal device including the antenna device 10) by arranging a plurality of areas covered by a base station, in a cell shape. In addition, the antenna device 10 may support low power wide area (LPWA) communication. Moreover, the antenna device 10 may support a radio communication scheme of a proprietary standard.

Here, LPWA communication is radio communication that enables low-power wide-range communication. For example, LPWA communication is Internet of Things (IoT) radio communication using a specified low power radio (for example, 920 MHz band) or an industrial-science-medical (ISM) band. Note that LPWA communication supported by the antenna device 10 may conform to the LPWA standard. Examples of the LPWA standard include ELTRES, ZETA, SIGFOX, LoRaWAN, and NB-Iot. Of course, the LPWA standard is not limited thereto, and may be other LPWA standards.

The two antennas 11 (antennas 11a and 11b) are used for communication with close use bands. For example, it is assumed that one of the two antennas 11 (for example, antenna 11a) is a first antenna used for communication in the first frequency band, and the other one (for example, antenna 11b) is a second antenna used for communication in the second frequency band. At this time, the difference between the frequencies of the first frequency band and the second frequency band may be within 1 GHz. More specifically, a value obtained by subtracting the lower limit of the higher frequency band of the first frequency band and the second frequency band from the upper limit of the lower frequency band of the first frequency band and the second frequency band may be within +1 GHz. For example, the first frequency band and the second frequency band may be any one of the following (1) to (4).
(1) Bluetooth/Wi-Fi 2.4 GHz band - LTE B1
(2) Bluetooth/Wi-Fi 2.4 GHz band - LTE B7
(3) Wi-Fi 5 GHz band - NR n79
(4) Wi-Fi 5 GHz band - NR n96

Here, LTE B1 is Band 1 (1920 MHz to 1980 MHz/2110 MHz to 2170 MHz) of the LTE frequency band. In addition, LTE B7 is Band 7 (2500 MHz to 2570 MHz/2620 MHz to 2690 MHz) of the LTE frequency band. Furthermore, NR n79 is n79 band (4400 MHz to 5000 MHz) of the 5G NR frequency band, and NR n96 is n96 (5925 MHz to 7125 MHz) of the 5G NR frequency band.

Returning to FIG. 3, the antenna matching circuits 12 (antenna matching circuits 12a and 12b) are matching circuits using the inductor (coil) and the capacitor (condenser). For example, the antenna matching circuit 12 is a parallel resonant matching circuit. The antenna matching circuit 12 of the present embodiment is a matching circuit using the inductor and the capacitor, and has a Q value lower than that of an antenna duplexer 13 and a filter 14 described later.

The antenna duplexer 13 (antenna duplexer 13a) is a block used by one antenna to be shared by radio waves in a plurality of frequency bands. For example, the antenna duplexer 13 is a circuit/element/device that separates a radio wave on the transmission side and a radio wave on the reception side. The antenna duplexer may also be referred to as a duplexer or a triplexer. The antenna duplexer 13 includes a plurality of filters having different frequency bands. The filter may be a surface acoustic wave (SAW) filter or a bulk acoustic wave (BAW) filter. The filter is not limited to the SAW filter and the BAW filter, and may be, for example, a dielectric filter. The antenna duplexer 13 has a higher Q value (steeper attenuation characteristic) than the antenna matching circuit 12 using the inductor and the capacitor.

The filter 14 (filter 14b) is a block (circuit/element/device) having a function of blocking a radio wave of a specific frequency. For example, the filter 14 is a band-pass filter that allows only a radio wave having a specific frequency to pass therethrough. The filter 14 may be a SAW filter or a BAW filter. In addition, the filter may be a dielectric filter. The SAW filter is a filter using a surface acoustic wave. In addition, the BAW filter is a filter using a bulk acoustic wave. Note that the filter 14b is not limited to the SAW filter and the BAW filter, and may be, for example, a dielectric filter. The filter 14 of the present embodiment has a higher Q value (steeper attenuation characteristic) than the antenna matching circuit 12 using the inductor and the capacitor.

The lines 15 (lines 15a and 15b) are a transmission line for adjusting an impedance of a predetermined frequency band at the feeding point of the antenna 11. The line 15 is typically a strip line (SL) or a micro strip line (MSL), but the line 15 is not limited thereto. For example, the line 15 may be a coaxial cable or a flexible cable. In addition, the line 15 may be a combination of a plurality of types of lines (for example, a stripline, a microstripline, a coaxial cable, and a flexible cable).

The lines 15 are each arranged between the antennas 11 and the antenna duplexer 13/filter 14. The line 15a is directly or indirectly connected to the antenna 11a, and the line 15b is directly or indirectly connected to the antenna 11b. In the example of FIG. 3, the line 15a is connected to the antenna 11a via the antenna matching circuit 12a, and the line 15b is connected to the antenna 11b via the antenna matching circuit 12b. More specifically, the line 15a is arranged between the antenna matching circuit 12a and the antenna duplexer 13a, and the line 15b is arranged between the antenna matching circuit 12b and the filter 14b.

In the present embodiment, by adjusting the length of the line 15, the impedance of the counterpart band at a feeding point of the own antenna is increased. For example, it is assumed that the antenna 11a is an antenna used for communication in the first frequency band (for example, LTE and/or NR communication), and the antenna 11b is an antenna used for communication in the second frequency band (for example, Bluetooth and/or Wi-Fi communication). At this time, by adjusting the length of the line 15a, the impedance of the second frequency band at a feeding point Pa of the antenna 11a is increased more than the impedance of the first frequency band at the feeding point Pa of the antenna 11a. In addition, by adjusting the length of the line 15b, the impedance of the first frequency band at a feeding point Pb of the antenna 11b is increased more than the impedance of the second frequency band at the feeding point Pb of the antenna 11b.

Note that the line 15a may be a line having a length that makes the impedance of the second frequency band at the feeding point Pa of the antenna 11a four times or more (desirably six times or more) the magnitude of the impedance of the first frequency band at the feeding point Pa of the antenna 11a. Here, the magnitude of the impedance may be the square root of the sum of squares of the real part and the imaginary part of the complex impedance. In addition, the length of the line 15a may be a length of -100% to +200% of the 1/4 wavelength of the radio wave in the second frequency band. Moreover, the length of the line 15a may be a length of -70% to +170% of the 1/4 wavelength of the radio wave in the second frequency band, or may be a length of -60% to +160% of the 1/4 wavelength of the radio wave in the second frequency band.

In addition, the line 15b may be a line having a length that makes the impedance of the first frequency band at the feeding point Pb of the antenna 11b four times or more (desirably six times or more) the impedance of the second frequency band at the feeding point Pb of the antenna 11b. At this time, the length of the line 15b may be a length of -100% to +200% of the 1/4 wavelength of the radio wave in the first frequency band. Furthermore, the length of the line 15b may be a length of -70% to +170% of the 1/4 wavelength of the radio wave in the first frequency band, or may be a length of -60% to +160% of the 1/4 wavelength of the radio wave in the first frequency band.

Note that the configuration of the antenna device 10 is not limited to the above. For example, the antenna device 10 may include a signal processor that is directly or indirectly connected to the antenna duplexer 13a and/or the filter 14b and processes a transmission signal or a reception signal.

In addition, the antenna device 10 may be a dual-polarized antenna. In a case where the antenna device 10 is a dual-polarized antenna, the antenna device 10 may use vertically polarized waves (V-polarized waves) and horizontally polarized waves (H-polarized waves) in transmitting radio signals. Note that the direction of the polarized wave is not limited to horizontal and vertical directions. For example, the antenna device 10 may be configured to be able to support dual polarized waves in polarization directions of 45 degrees and -45 degrees from the vertical direction. Then, the antenna device 10 may control the directivity of the radio signal transmitted using the vertically polarized wave and the horizontally polarized wave (or dual polarized waves in polarization directions of 45 degrees and -45 degrees from the vertical direction). In addition, the antenna device 10 may be configured to transmit and receive spatially multiplexed signals via a plurality of layers including a plurality of antenna elements.

### <2-2. Configuration example of terminal device>

Although the configuration of the antenna device 10, which is a basic form, has been described above, next, the configuration of the terminal device 20 will be described. As described above, the terminal device 20 has features similar to those of the antenna device 10. The terminal device 20 can be regarded as a type of the antenna device 10. The antenna device 10 may be regarded as a part of the terminal device 20.

The terminal device 20 is a radio communication device that performs radio communication with another communication device such as a base station. The terminal device 20 is, for example, a mobile phone, a smart device (smartphone or tablet), a personal digital assistant (PDA), or a personal computer. In addition, the terminal device 20 may be equipment such as a business camera having a communication function, or may be a motorcycle, a moving relay vehicle, or the like on which communication equipment such as a field pickup unit (FPU) is mounted. Furthermore, the terminal device 20 may be an industrial robot having a communication function. Moreover, the terminal device 20 may be a machine to machine (M2M) device or an Internet of Things (IoT) device.

The terminal device 20 is configured to connect to a network using a radio access technology (RAT) such as long term evolution (LTE), new radio (NR), Wi-Fi, or Bluetooth (registered trademark). The radio access technology supported by the terminal device 20 is not limited thereto. For example, the terminal device 20 may be configured to support 6G. Here, 6G is a type of cellular communication technology, and enables mobile communication of the terminal device 20 by arranging a plurality of areas covered by the base station, in a cell shape.

Note that the terminal device 20 may be able to perform non-orthogonal multiple access (NOMA) communication with the base station. Here, the NOMA communication is communication using a non-orthogonal resource (transmission, reception, or both). In addition, when communicating with the base station, the terminal device 20 may be able to use an automatic retransmission technology such as hybrid automatic repeat request (HARQ). The terminal device 20 may be able to perform sidelink communication with another terminal device 20. The terminal device 20 may also be able to use an automatic retransmission technology such as HARQ when performing sidelink communication. Note that the terminal device 20 may also be able to perform the NOMA communication in communication (sidelink) with another terminal device 20.

In addition, the terminal device 20 may be able to perform LPWA communication with another communication device (for example, base station and another terminal device). Furthermore, the radio communication used by the terminal device 20 may be radio communication using a millimeter wave band (30 GHz to 300 GHz band) or a quasi-millimeter wave band (for example, 20 GHz to 30 GHz band). Moreover, the radio communication used by the terminal device 20 may be radio communication using a frequency band of less than 6 GHz (for example, Sub6) or may be radio communication using a frequency band of 6 GHz or more (for example, 6Ghz to 20 GHz band). Furthermore, the terminal device 20 may be able to perform radio communication using a terahertz wave.

In addition, the terminal device 20 may be a mobile device. The mobile device is a mobile radio communication device. At this time, the terminal device 20 may be a radio communication device installed in a mobile body or may be a mobile body itself. For example, the terminal device 20 may be a vehicle that moves on a road such as an automobile, a bus, a truck, or a motorcycle, a vehicle that moves on a rail installed on a track such as a train, or a radio communication device mounted on the vehicle. Note that the mobile body may be a mobile terminal, or may be a mobile body that moves on land (on the ground in a narrow sense), in the ground, on water, or under water. Furthermore, the mobile body may be a mobile body that moves inside the atmosphere such as a drone or a helicopter, or may be a mobile body that moves outside the atmosphere such as an artificial satellite.

The terminal device 20 may be simultaneously connected to a plurality of base stations or to a plurality of cells to perform communication. For example, in a case where one base station supports a communication area via a plurality of cells (for example, pCell, sCell), by a carrier aggregation (CA) technology, a dual connectivity (DC) technology, or a multi-connectivity (MC) technology, the plurality of cells is bundled and the base station and the terminal device 20 can communicate with each other. Alternatively, by a coordinated multi-point transmission and reception (CoMP) technology, the terminal device 20 and the plurality of base stations can communicate with each other via cells of different base stations.

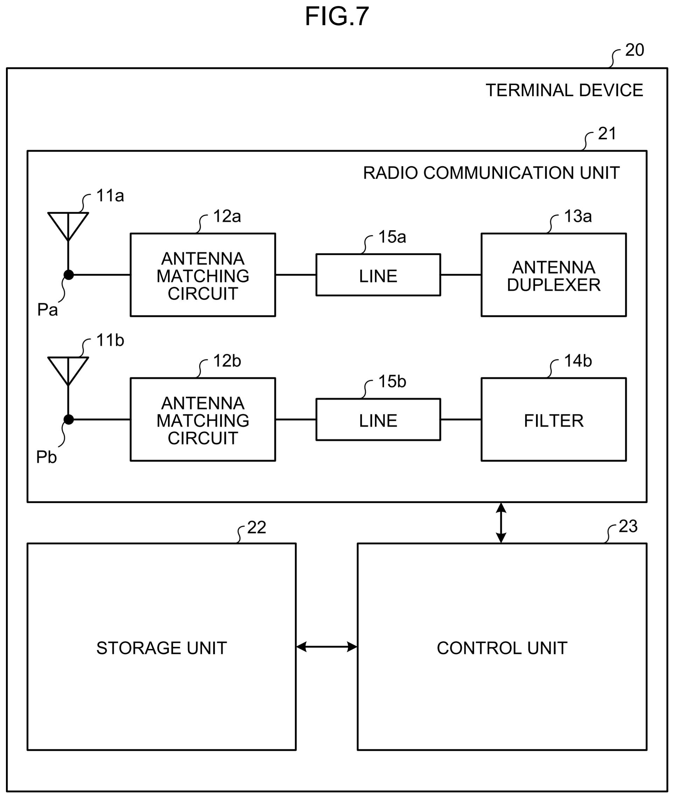

FIG. 7 is a diagram illustrating a configuration example of the terminal device 20 according to the embodiment of the present disclosure. The terminal device 20 includes a radio communication unit 21, a storage unit 22, and a control unit 23. Note that the configuration illustrated in FIG. 7 is a functional configuration, and the hardware configuration may be different from the functional configuration. In addition, the functions of the terminal device 20 may be distributed and implemented in a plurality of physically separated configurations.

The radio communication unit 21 is an antenna unit for performing radio communication with other radio communication devices (for example, base station and other terminal devices). The radio communication unit 21 operates according to the control of the control unit 23 The configuration of the radio communication unit 21 is similar to the configuration of the antenna device 10 described above.

The storage unit 22 is a storage device capable of reading and writing data such as a DRAM, an SRAM, a flash memory, or a hard disk.

The control unit 23 is a controller that controls each unit of the terminal device 20. The control unit 23 is realized by, for example, a processor such as a CPU or an MPU. For example, the control unit 23 is realized by a processor executing various programs stored in the storage device inside the terminal device 20 using a RAM or the like as a work area. Note that the control unit 23 may be realized by an integrated circuit such as an ASIC or an FPGA. Any of the CPU, the MPU, the ASIC, and the FPGA can be regarded as a controller. In addition, the control unit 23 may be realized by a GPU in addition to or instead of the CPU.

### <2-3. Configuration example of base station>

Next, a configuration of the base station 30 will be described. As described above, the base station 30 has features similar to those of the antenna device 10. The base station 30 can be regarded as a type of the antenna device 10. The antenna device 10 may be regarded as a part of the base station 30.

The base station 30 is a radio communication device that performs radio communication with the terminal device 20. The base station 30 may be configured to perform radio communication with the terminal device 20 via a relay station, or may be configured to directly perform radio communication with the terminal device 20.

The base station 30 is a type of the communication device. More specifically, the base station 30 is a device corresponding to a radio base station (such as base station, Node B, eNB, or gNB) or a radio access point. The base station 30 may be a radio relay station. In addition, the base station 30 may be an optical extension device called a remote radio head (RRH) or a radio unit (RU). Furthermore, the base station 30 may be a receiving station such as a field pickup unit (FPU). Moreover, the base station 30 may be an integrated access and backhaul (IAB) donor node or an IAB relay node that provides a radio access line and a radio backhaul line by time division multiplexing, frequency division multiplexing, or space division multiplexing.

Note that the radio access technology used by the base station 30 may be a cellular communication technology or a radio LAN technology. Of course, the radio access technology used by the base station 30 is not limited thereto, and may be other radio access technologies. For example, the radio access technology used by the base station 30 may be a low power wide area (LPWA) communication technology.

In addition, the radio communication used by the base station 30 may be radio communication using a millimeter wave band (30 GHz to 300 GHz band) or a quasi-millimeter wave band (for example, 20 GHz to 30 GHz band). Of course, the radio communication used by the base station 30 may be radio communication using a frequency band of less than 6 GHz (for example, Sub6) or may be radio communication using a frequency band of 6 GHz or more (for example, 6Ghz to 20 GHz band). Furthermore, the radio communication used by the terminal device 20 may be radio communication using a terahertz wave.

In addition, the base station 30 may be able to perform non-orthogonal multiple access (NOMA) communication with the terminal device 20. Note that the base station 30 may be able to perform NOMA communication with another base station 30.

Note that the concept of the base station includes not only a donor base station but also a relay base station (also referred to as a relay station). For example, the relay base station may be any one of an RF repeater, a smart repeater, and an intelligent surface. In addition, the concept of the base station includes not only a structure having a function of the base station but also an device installed in the structure.

The structure is, for example, a building such as a high-rise building, a house, a steel tower, a station facility, an airport facility, a harbor facility, an office building, a school building, a hospital, a factory, a commercial facility, or a stadium. Note that the concept of the structure includes not only a building but also a non-building structure such as a tunnel, a bridge, a dam, a fence, or an iron pole, and equipment such as a crane, a gate, or a windmill. In addition, the concept of the structure includes not only a structure on land (on the ground in a narrow sense) or in the ground but also a structure on water such as a pier or a megafloat, and a structure under water such as an marine observation facility. The base station may be referred to as an information processing device.

The base station 30 may be a donor station or a relay station. In addition, the base station 30 may be a fixed station or a mobile station. The mobile station is a radio communication device configured to be movable. At this time, the base station 30 may be a device installed in a mobile body or may be a mobile body itself. For example, a relay station having mobility can be regarded as the base station 30 as a mobile station. In addition, a device that is originally a device having a mobility and has a function of a base station (at least a part of the function of the base station), such as a vehicle, an unmanned aerial vehicle (UAV) typified by a drone, or a smartphone, also corresponds to the base station 30 as a mobile station.

Here, the mobile body may be a mobile terminal such as a smartphone or a mobile phone. In addition, the mobile body may be a mobile body (for example, a vehicle such as an automobile, a bicycle, a bus, a truck, a motorcycle, a train, or a linear motor car) that moves on land (on the ground in a narrow sense) or a mobile body (for example, the subway) that moves in the ground (for example, in the tunnel). Furthermore, the mobile body may be a mobile body (for example, a ship such as a passenger ship, a cargo ship, or a hovercraft) that moves on water or a mobile body (for example, a submersible ship such as a submarine, a submarine boat, or an unmanned submersible) that moves under water. Note that the mobile body may be a mobile body (for example, an aircraft such as an airplane, an airship, or a drone) that moves inside the atmosphere.

In addition, the base station 30 may be a ground base station (ground station) installed on the ground. For example, the base station 30 may be a base station arranged in a structure on the ground, or may be a base station installed in a mobile body moving on the ground. More specifically, the base station 30 may be an antenna installed in a structure such as a building and a signal processing device connected to the antenna. Of course, the base station 30 may be a structure or a mobile body itself. "Ground" is a ground in a broad sense including not only on land (on the ground in a narrow sense) but also in the ground, on water, and under water. Note that the base station 30 is not limited to the ground base station. For example, when a communication system including the base station 30 is a satellite communication system, the base station 30 may be an aircraft station. Seen from the satellite station, the aircraft station located on the earth is a ground station.

Note that the base station 30 is not limited to the ground station. The base station 30 may be a non-ground base station (non-ground station) capable of floating in the air or space. For example, the base station 30 may be an aircraft station or a satellite station.

Here, the satellite station is a satellite station capable of floating outside the atmosphere. The satellite station may be a device mounted on a space vehicle such as an artificial satellite, or may be a space vehicle itself. The space vehicle is a mobile body that moves outside the atmosphere. Examples of the space vehicle include artificial bodies such as artificial satellites, spacecraft, space stations, and probes. Note that the satellite serving as the satellite station may be any of a low earth orbiting (LEO) satellite, a medium earth orbiting (MEO) satellite, a geostationary earth orbiting (GEO) satellite, and a highly elliptical orbiting (HEO) satellite. Of course, the satellite station may be a device mounted on a low earth orbiting satellite, a medium earth orbiting satellite, a geostationary earth orbiting satellite, or a highly elliptical orbiting satellite.

In addition, the aircraft station is a radio communication device capable of floating inside the atmosphere such as an aircraft. The aircraft station may be a device mounted on the aircraft or the like, or may be the aircraft itself. Note that the concept of the aircraft includes not only a heavy aircraft such as an airplane or a glider but also a light aircraft such as a balloon or an airship. In addition, the concept of the aircraft includes not only the heavy aircraft and the light aircraft but also a rotorcraft such as a helicopter or an autogyroscope. Note that the aircraft station (or an aircraft on which an aircraft station is mounted) may be an unmanned aircraft such as a drone.

Note that the concept of the unmanned aircraft also includes an unmanned aircraft system (UAS) and a tethered UAS. In addition, the concept of the unmanned aircraft also includes a lighter than air (LTA) UAS and a heavier than air (HTA) UAS. Other concepts of unmanned aircrafts also include high altitude UAS platforms (HAPs).

The coverage of the base station 30 may be large such as a macro cell or small such as a pico cell. Of course, the coverage of the base station 30 may be extremely small such as a femto cell. In addition, the base station 30 may have a beamforming capability. In this case, in the base station 30, a cell or a service area may be formed for each beam.

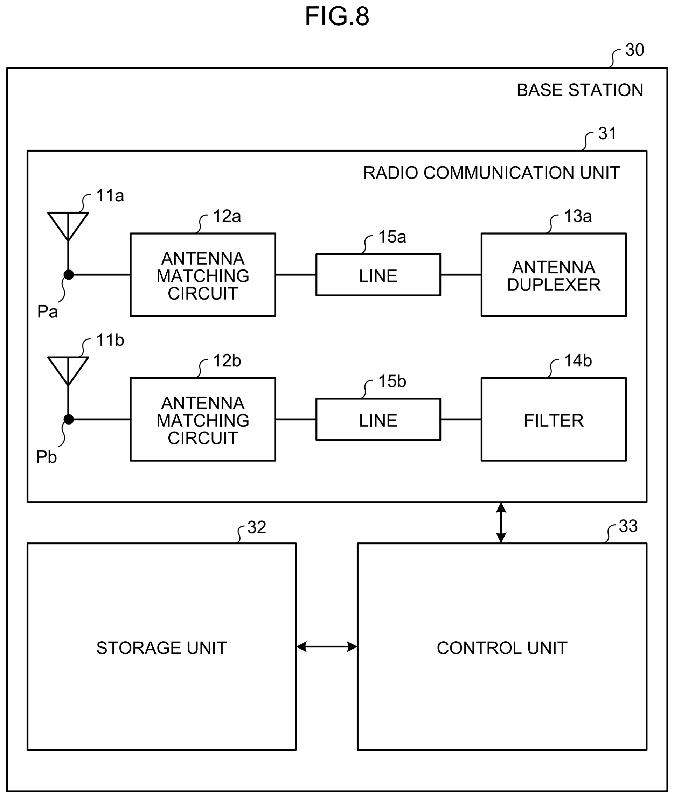

FIG. 8 is a diagram illustrating a configuration example of the base station 30 according to the embodiment of the present disclosure. The base station 30 includes a radio communication unit 31, a storage unit 32, and a control unit 33. Note that the configuration illustrated in FIG. 8 is a functional configuration, and the hardware configuration may be different from the functional configuration. In addition, the functions of the base station 30 may be distributed and implemented in a plurality of physically separated configurations.

The radio communication unit 31 is an antenna unit for performing radio communication with other radio communication devices (for example, terminal device and other base stations). The radio communication unit 31 operates according to the control of the control unit 33 The configuration of the radio communication unit 31is similar to the configuration of the antenna device 10 described above.

The storage unit 32 is a storage device capable of reading and writing data such as a DRAM, an SRAM, a flash memory, or a hard disk.

The control unit 33 is a controller that controls each unit of the base station 30. The control unit 33 is realized by, for example, a processor such as a CPU or an MPU. For example, the control unit 33 is realized by a processor executing various programs stored in the storage device inside the base station 30 using a RAM or the like as a work area. Note that the control unit 33 may be realized by an integrated circuit such as an ASIC or an FPGA. Any of the CPU, the MPU, the ASIC, and the FPGA can be regarded as a controller. In addition, the control unit 33 may be realized by a GPU in addition to or instead of the CPU.

In the present embodiment, the concept of the base station may include a set of a plurality of physical or logical devices. For example, in the embodiment, the base station may be distinguished into a plurality of devices such as a baseband unit (BBU) and a radio unit (RU). The base station may be interpreted as an assembly of the plurality of devices. In addition, the base station may be either or both of the BBU and the RU.

The BBU and the RU may be connected by a predetermined interface (for example, an enhanced common public radio interface (eCPRI). Note that the RU may be referred to as a remote radio unit (RRU) or a radio DoT (RD). In addition, the RU may support a gNB distributed unit (gNB-DU). Furthermore, the BBU may support a gNB central unit (gNB-CU). In addition, the RU may be a radio device connected to the gNB-DU. The gNB-CU, the gNB-DU, and the RU connected to the gNB-DU may be configured to conform to an open radio access network (O-RAN). Further, the RU may be a device integrally formed with the antenna.

An antenna (for example, an antenna integrally formed with the RU) included in the base station may adopt an advanced antenna system and support MIMO(for example, FD-MIMO) or beamforming. In addition, the antenna included in the base station may include, for example, 64 transmission antenna ports and 64 reception antenna ports.

Furthermore, the antenna mounted on the RU may be an antenna panel including one or more antenna elements. The RU may be equipped with one or more antenna panels. For example, the RU may be equipped with two types of antenna panels of a horizontally polarized antenna panel and a vertically polarized antenna panel, or two types of antenna panels of a clockwise circularly polarized antenna panel and a counterclockwise circularly polarized antenna panel. In addition, the RU may form and control an independent beam for each antenna panel.

Note that a plurality of base stations may be connected to each other. One or more base stations may be included in a radio access network (RAN). In this case, the base station may be simply referred to as a RAN, a RAN node, an access network (AN), or an node. Note that the RAN in LTE may be referred to as an enhanced universal terrestrial RAN (EUTRAN). In addition, the RAN in NR may be referred to as NGRAN. Furthermore, the RAN in 6G may be referred to as 6GRAN. Moreover, the RAN in W-CDMA (UMTS) is may be referred to as UTRAN.

Note that the LTE base station may be referred to as an evolved node B (eNodeB) or an eNB. At this time, the EUTRAN includes one or more eNodeBs (eNBs). Furthermore, the NR base station may be referred to as a gNodeB or a gNB. At this time, the NGRAN includes one or more gNBs. The 6G base station may be referred to as a 6GNodeB, a 6gNodeB, a 6GNB, or a 6gNB. At this time, the 6GRAN includes one or more 6GNBs. The EUTRAN may include a gNB (en-gNB) connected to a core network (EPC) in the LTE communication system (EPS). Similarly, the NGRAN may include an ng-eNB connected to a core network 5GC in the 5G communications system (5GS).

Note that, in a case where the base station is an eNB, a gNB, a 6GNB, or the like, the base station may be referred to as 3GPP access. In addition, in a case where the base station is a radio access point, the base station may be referred to as non-3GPP access. Further, the base station may be an optical extension device called a remote radio head (RRH) or a radio unit (RU). Moreover, in a case where the base station is a gNB, the base station may be a combination of the gNB-CU and the gNB-DU described above, or may be either one of the gNB-CU and the gNB-DU.

### <<3. Simulation>>

Although the device configuration has been described above, simulation results using a computer will be described below. As described above, in order to prevent deterioration of the antenna characteristic, it is necessary to increase the impedance of the counterpart band of the own antenna. First, for comparison with the present embodiment, a simulation result of impedance adjustment by adjusting a constant of a matching circuit will be described. Thereafter, a simulation result of impedance adjustment using the solution of the present embodiment will be described.

In the following description, a simulation of impedance adjustment by adjusting a constant of a matching circuit is referred to as a first simulation, and a simulation of impedance adjustment using the solution of the present embodiment is referred to as a second simulation.

### <3-1. First simulation>

First, a result of the first simulation will be described. As described above, the first simulation is a simulation of impedance adjustment by adjusting a constant of the matching circuit.

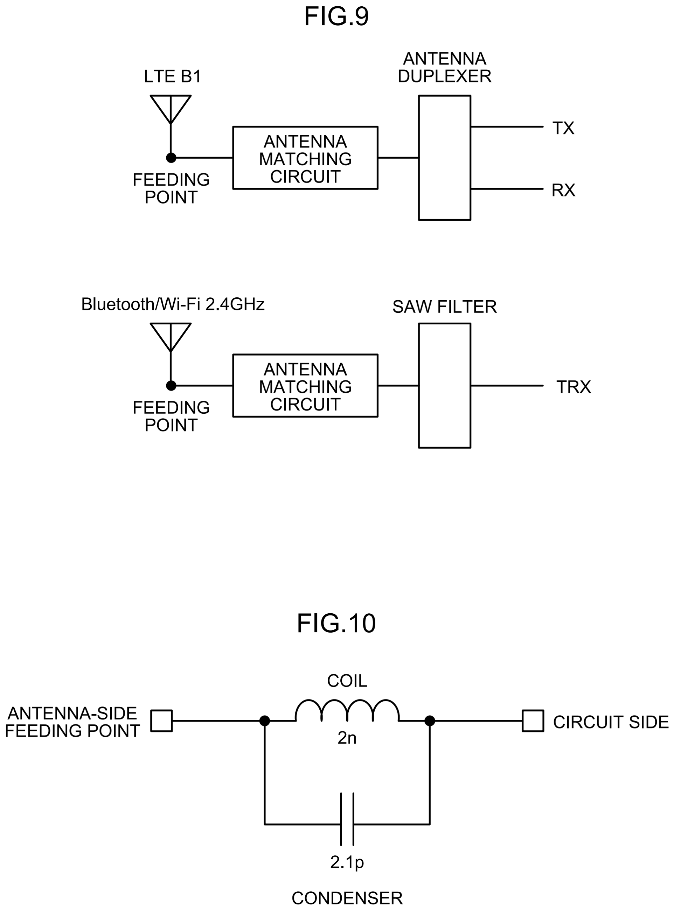

FIG. 9 is a diagram illustrating a configuration of an antenna device used for the first simulation. As illustrated in FIG. 9, the antenna device includes a first antenna used for LTE B1 communication, and a second antenna arranged close to the first antenna and used for communication in a Bluetooth/Wi-Fi 2.4 GHz band. An antenna matching circuit and an antenna duplexer/SAW filter are connected to a subsequent stage of each of two antennas.

FIG. 10 is a diagram illustrating a configuration of the antenna matching circuit used in the first simulation. The antenna matching circuit used in the first simulation is a parallel resonance circuit including a coil and a condenser. In the first simulation, by adjusting the constant of the antenna matching circuit of LTE B1, the impedance of the Bluetooth/Wi-Fi band is adjusted so as to sufficiently increase. In the first simulation, the inductance of the coil is 2 nH, and the capacitance of the condenser is 2.1 pF.

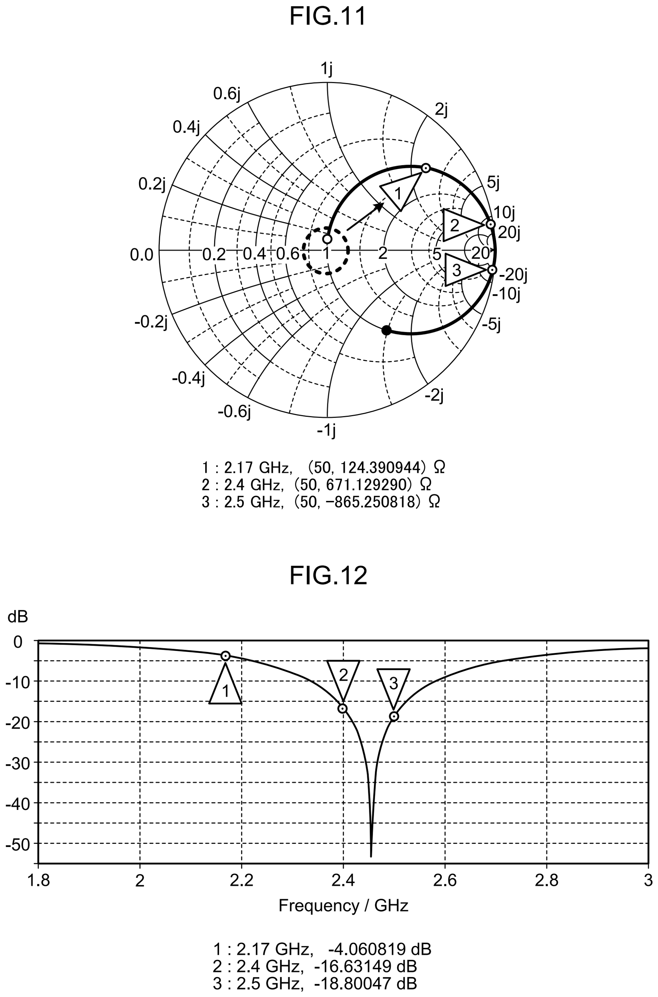

FIG. 11 is a diagram illustrating a result of the first simulation. Specifically, FIG. 11 is a Smith chart illustrating the impedance at a feeding point of the first antenna (antenna of LTE B1). "1" at the center of the chart is 50 Ω. In the drawing, a marker 1 indicates the feedpoint impedance of the LTE B1 upper limit frequency (2.17 GHz). In addition, a marker 2 indicates the feedpoint impedance of the Bluetooth/Wi-Fi lower limit frequency (2.4 GHz). Furthermore, a marker 3 indicates the feedpoint impedance of the Bluetooth/Wi-Fi upper limit frequency (2.5 GHz). Note that, in the following description, the impedance may be expressed as (R, X) Ω. R is a real part, and X is an imaginary part.

As a result of the first simulation, the feedpoint impedance of the LTE B1 upper limit frequency (2.17 GHz) was (50, 124.390944) Ω. In addition, the feedpoint impedance of the Bluetooth/Wi-Fi lower limit frequency (2.4 GHz) was (50, 671.129290) Ω. Furthermore, the feedpoint impedance of the Bluetooth/Wi-Fi upper limit frequency (2.5 GHz) was (50, -865.250818) Ω.

As can be seen from FIG. 11, the impedance of the Bluetooth/Wi-Fi band is adjusted to a high value by adjustment of the matching circuit. However, the feedpoint impedance of LTE B1 greatly deviates from around 50 Ω. That is, when the antenna matching circuit of LTE B1 is adjusted so that the impedance of the Bluetooth/Wi-Fi band increases, since a Q value of the antenna circuit is low, the feedpoint impedance of LTE B1 greatly deviates from around 50 Ω.

FIG. 12 is a diagram illustrating a result of the first simulation. More specifically, FIG. 12 is a diagram illustrating a passage characteristic of the antenna matching circuit connected to the first antenna. In the drawing, a marker 1 indicates a passage loss at the LTE B1 upper limit frequency (2.17 GHz). In addition, a marker 2 indicates a passage loss at the Bluetooth/Wi-Fi lower limit frequency (2.4 GHz). Furthermore, a marker 3 indicates a passage loss at the Bluetooth/Wi-Fi upper limit frequency (2.5 GHz).

As a result of the first simulation, the passage loss at the LTE B1 upper limit frequency (2.17 GHz) was - 4.060819 dB. In addition, the passage loss at the Bluetooth/Wi-Fi lower limit frequency (2.4 GHz) was - 16.63149 dB. Furthermore, the passage loss at the Bluetooth/Wi-Fi upper limit frequency (2.5 GHz) was - 18.80047 dB.

As can be seen from FIG. 12, since the feedpoint impedance of LTE B1 deviates from around 50 Ω, a loss also occurs in LTE B1 that is an original passage band. That is, if the feedpoint impedance of the counterpart band is increased by adjusting the constant of the antenna matching circuit, the antenna characteristics deteriorate.

### <3-2. Second simulation>

Next, a result of the second simulation will be described. As described above, the second simulation is a simulation of impedance adjustment using the solution of the present embodiment.

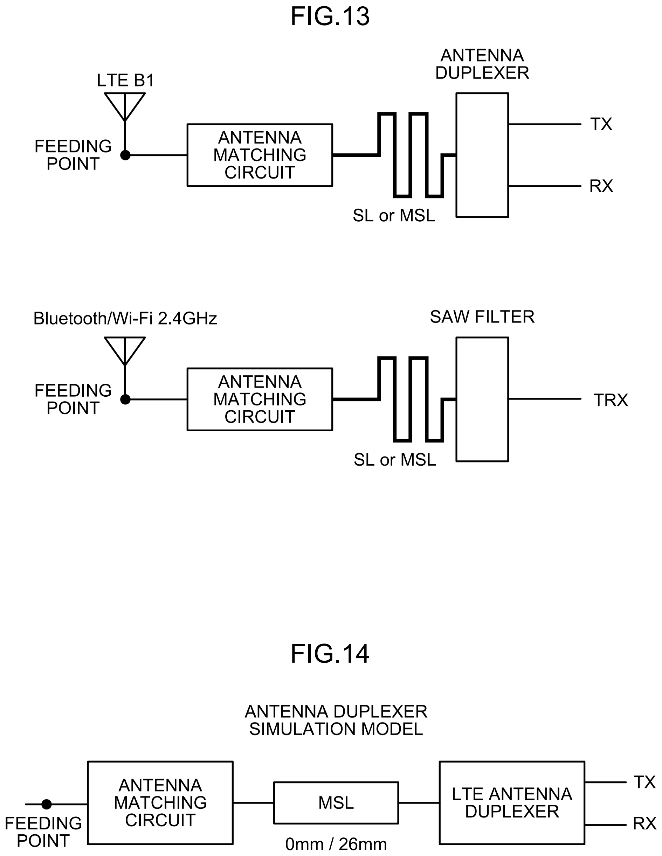

FIG. 13 is a diagram illustrating a configuration of the antenna device of the present embodiment used in the second simulation. As illustrated in FIG. 13, the antenna device includes a first antenna used for LTE B1 communication, and a second antenna arranged close to the first antenna and used for communication in a Bluetooth/Wi-Fi 2.4 GHz band. An antenna matching circuit and an antenna duplexer/SAW filter are connected to a subsequent stage of each of two antennas. In the present embodiment, a line (stripline (SL) or microstripline (MSL)) having a predetermined length is provided between the antenna matching circuit having a low Q value and the antenna duplexer/SAW filter having a high Q value. In the second simulation, the feedpoint impedance is adjusted by adjusting the length of the line.

FIG. 14 is a diagram illustrating a simulation model used for the second simulation. In the second simulation, a circuit configuration used for the LTE B1 communication among the device configurations illustrated in FIG. 13 is used as the simulation model of the feedpoint impedance. As illustrated in FIG. 14, the simulation model includes the antenna matching circuit connected to the first antenna used for the LTE B1 communication, the LTE antenna duplexer, and the microstrip line (MSL) arranged between the antenna matching circuit and the LTE antenna duplexer.

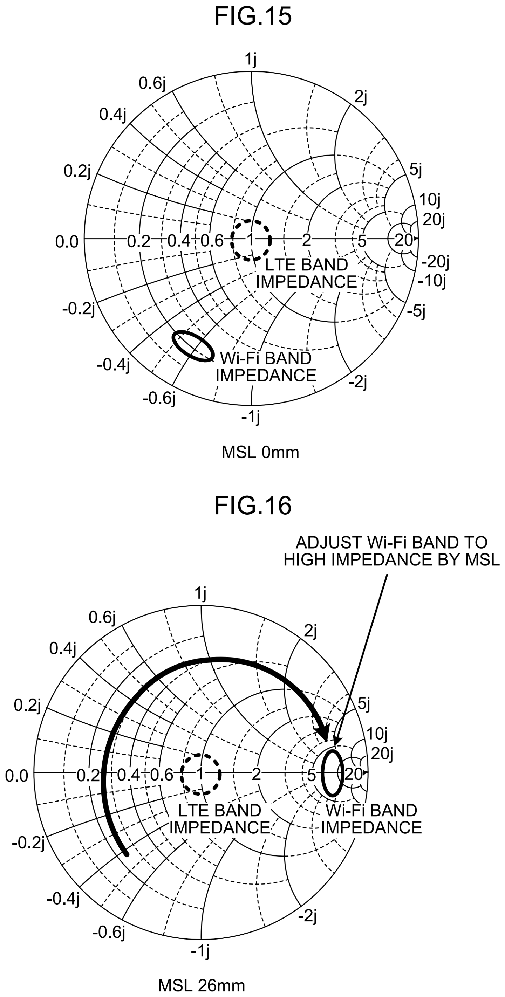

FIG. 15 is a diagram illustrating the impedance at the feeding point of the first antenna in a case where the microstrip line is 0 mm. In addition, FIG. 16 is a diagram illustrating the impedance at the feeding point of the first antenna in a case where the microstrip line is 26 mm. The case where the microstrip line is 0 mm (that is, a case where there is no insertion of the line) is the conventional configuration, and the case where the microstrip line is 26 mm is the configuration of the present embodiment.

Note that, in the following description, the impedance of LTE B1 at the feeding point of the first antenna (antenna of LTE B1) may be referred to as an LTE band impedance, and the impedance of Bluetooth/Wi-Fi 2.4 GHz band at the feeding point of the first antenna may be referred to as a Wi-Fi band impedance. As can be seen from FIGS. 15 and 16, by inserting the microstrip line having a predetermined length, the Wi-Fi band impedance can be adjusted to a high impedance while maintaining the LTE band impedance around 50 Ω.

In the second simulation, the antenna efficiency of the second antenna (Bluetooth/Wi-Fi antenna) as the counterpart was simulated in each case where the microstrip line is 0 mm and 26 mm.

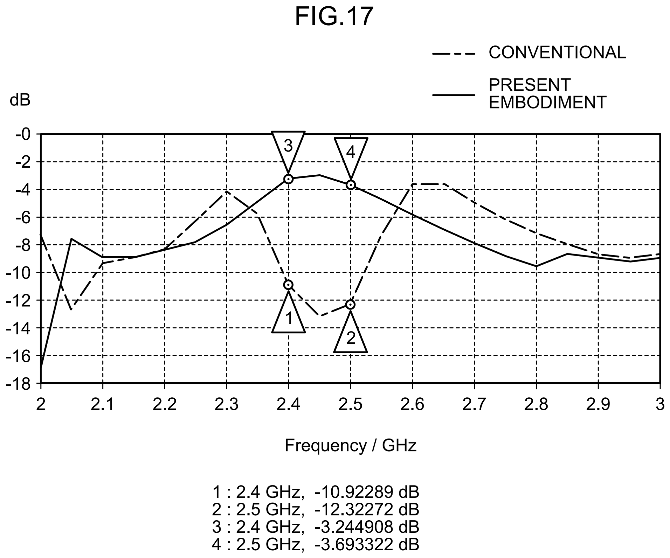

FIG. 17 is a diagram illustrating a result of simulation of the antenna efficiency of the second antenna. A chain line is a simulation result in the conventional configuration (a result in a case where the microstrip line is 0 mm), and a solid line is a simulation result in the configuration of the present embodiment (a result in a case where the microstrip line is 26 mm). In the drawing, a marker 1 indicates the antenna efficiency at 2.4 GHz in the conventional configuration. A marker 2 indicates the antenna efficiency at 2.5 GHz in the conventional configuration. A marker 3 indicates the antenna efficiency at 2.4 GHz in the configuration of the present embodiment. A marker 4 indicates the antenna efficiency at 2.5 GHz in the configuration of the present embodiment.

As a result of the second simulation, the antenna efficiency at 2.4 GHz in the conventional configuration was -10.92289 dB. In addition, the antenna efficiency at 2.5 GHz in the conventional configuration was -12.32272 dB. Furthermore, the antenna efficiency at 2.4 GHz in the configuration of the present embodiment was -3.244908 dB. Moreover, the antenna efficiency at 2.5 GHz in the configuration of the present embodiment was -3.693322 dB.

As can be seen from FIG. 17, providing the 26 mm microstrip line between the antenna matching circuit and the antenna duplexer improves the antenna efficiency by up to about 8.6 dB. That is, the performance of the antenna device can be enhanced by providing a line having a predetermined length between the antenna matching circuit having a low Q value and the antenna duplexer/filter having a high Q value.

### <<4. Modifications>>

The above-described embodiment is an example, and various modifications and applications are possible.

### <4-1. Modification regarding device configuration>

In the above-described embodiment, the antenna duplexer 13a is arranged at the subsequent stage of the antenna 11a, and the filter 14a is arranged at the subsequent stage of the antenna 11b. However, the arrangement of the antenna duplexer 13 and the filter 14 is not limited to this example.

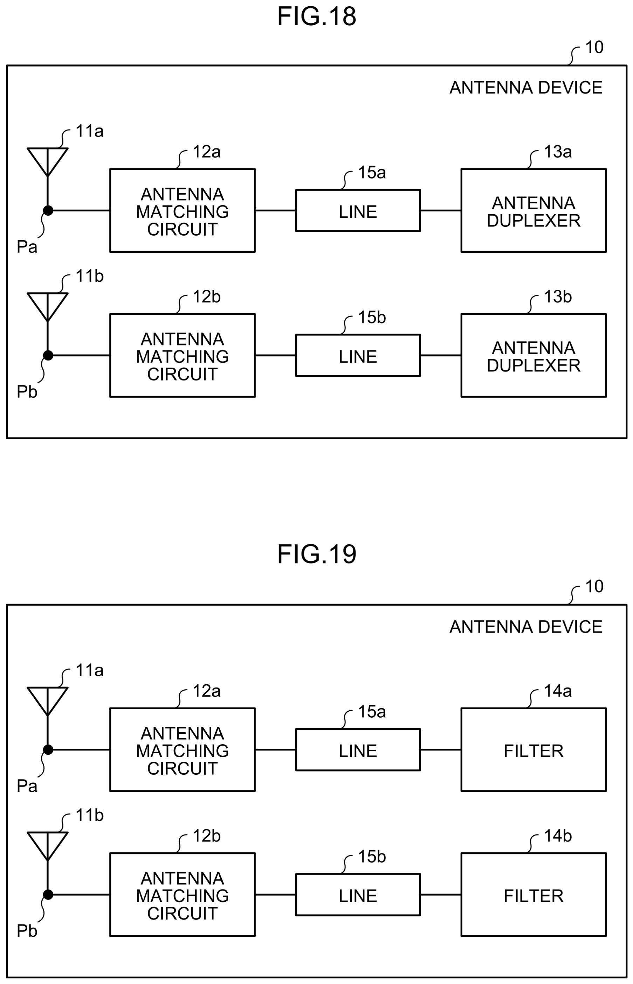

FIG. 18 is a diagram illustrating a modification of the antenna device 10. For example, the antenna device 10 may include an antenna duplexer 13a at a subsequent stage of an antenna 11a and an antenna duplexer 13b at a subsequent stage of an antenna 11b. Here, the antenna duplexer 13b may have a configuration similar to that of the antenna duplexer 13a. This similarly applies to the terminal device 20 and the base station 30.

FIG. 19 is a diagram illustrating a modification of the antenna device 10. The antenna device 10 may include a filter 14a at a subsequent stage of an antenna 11a and a filter 14b at a subsequent stage of an antenna 11b. Here, the filter 14a may have a configuration similar to that of the filter 14b. This similarly applies to the terminal device 20 and the base station 30.

In the above-described embodiment, the antenna device 10 includes the antenna matching circuit 12 (for example, the antenna matching circuit 12a or the antenna matching circuit 12b) at the subsequent stage of each of the plurality of antennas 11 (for example, antennas 11a and 11b). However, the antenna device 10 does not necessarily need to include the antenna matching circuit 12 at the subsequent stage of the antenna 11.

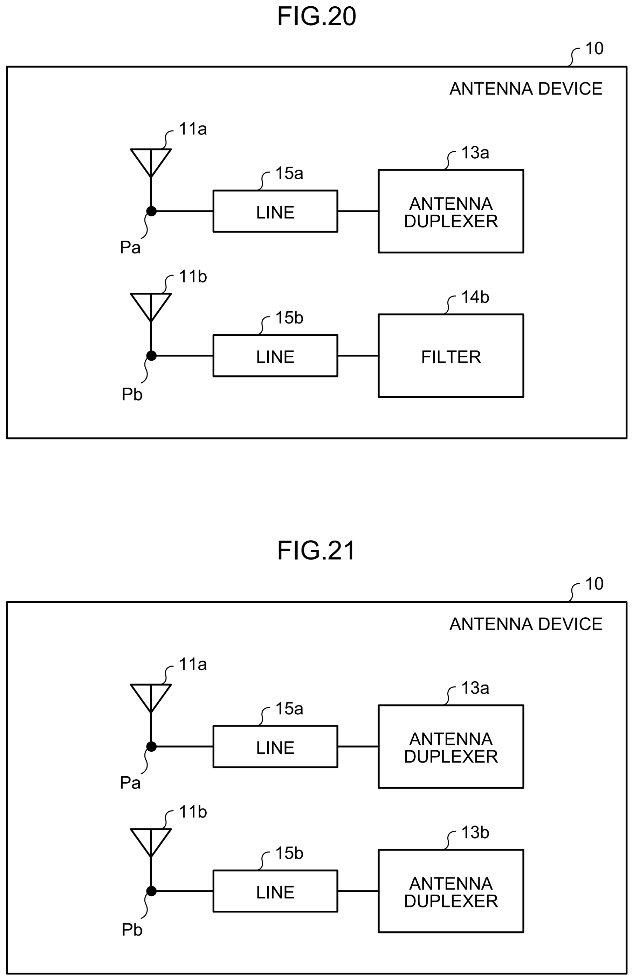

FIG. 20 is a diagram illustrating a modification of the antenna device 10. For example, a line 15a and an antenna duplexer 13a may be arranged without an antenna matching circuit 12 at the subsequent stage of an antenna 11a. In addition, a line 15a and a filter 14b may be arranged without an antenna matching circuit 12 at the subsequent stage of an antenna 11b. This similarly applies to the terminal device 20 and the base station 30.

FIG. 21 is a diagram illustrating a modification of the antenna device 10. For example, a line 15a and an antenna duplexer 13a may be arranged without an antenna matching circuit 12 at the subsequent stage of an antenna 11a. In addition, a line 15a and an antenna duplexer 13b may be arranged without an antenna matching circuit 12 at the subsequent stage of an antenna 11b. This similarly applies to the terminal device 20 and the base station 30.

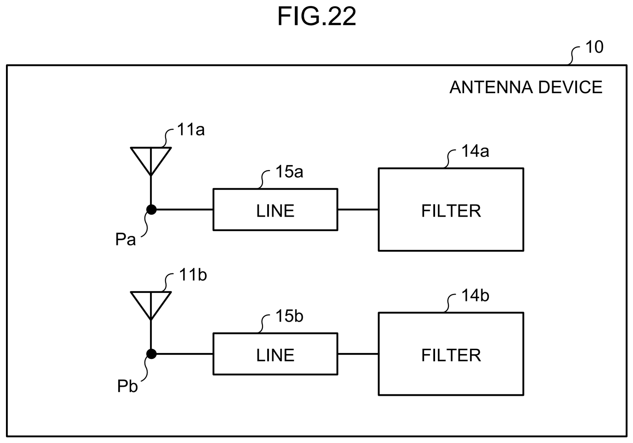

FIG. 22 is a diagram illustrating a modification of the antenna device 10. For example, a line 15a and a filter 14a may be arranged without an antenna matching circuit 12 at the subsequent stage of an antenna 11a. In addition, a line 15a and a filter 14b may be arranged without an antenna matching circuit 12 at the subsequent stage of an antenna 11b. This similarly applies to the terminal device 20 and the base station 30.

### <4-2. Modification regarding antenna>

In the above-described embodiment, the first antenna is an LTE antenna, and the second antenna is a Bluetooth/Wi-Fi antenna; however, the first antenna and the second antenna are not limited to this example. For example, a first antenna may be a Bluetooth/Wi-Fi antenna, and a second antenna may be an LTE antenna.

In addition, although the antenna 11a is the first antenna and the antenna 11b is the second antenna in the above-described embodiment, an antenna 11b may be the first antenna and an antenna 11a may be the second antenna.

Furthermore, the number of antennas included in the antenna device 10 is not limited to two antennas of the antenna 11a and the antenna 11b. The antenna device 10 may include two or more antennas. This similarly applies to the terminal device 20 and the base station 30.

### <4-3. Modification regarding communication scheme/use band>

In the above-described embodiment, the plurality of antennas 11 (for example, antennas 11a and 11b) included in the antenna device 10 is used for, for example, LTE communication or Bluetooth/Wi-Fi communication. However, the communication scheme of the two antennas 11 is not limited thereto. For example, some or all of a plurality of antennas 11 may be used for LPWA communication, or may be used for 5G or later communication such as 6G. This similarly applies to a plurality of antennas 11 included in the terminal device 20 and the base station 30.

In the above-described embodiment, the use bands of the plurality of antennas 11 (for example, antennas 11a and 11b) included in the antenna device 10 are, for example, the Bluetooth/Wi-Fi 2.4 GHz band, the Wi-Fi 5 GHz band, the LTE B1/B7, and the NR n79/n96. However, the use bands of the plurality of antennas 11 are not limited thereto.

For example, some or all of a plurality of antennas 11 may be used for communication in an LTE frequency band (any or all of LTE B1 to B255). In addition, some or all of the plurality of antennas 11 may be used for communication in an NR FR1 (any or all of NR n1 to n256). Some or all of the plurality of antennas 11 may be used for communication in NR FR2 (any or all of NR n257 to n262). Of course, some or all of the plurality of antennas 11 may be used for communication in frequency bands other than these. For example, some or all of the plurality of antennas 11 may be used for communication using a terahertz wave. This similarly applies to a plurality of antennas 11 included in the terminal device 20 and the base station 30.

### <4-4. Other modifications>

A control device that controls the antenna device 10, the terminal device 20, or the base station 30 of the present embodiment may be realized by a dedicated computer system or a general-purpose computer system.

In addition, among the processes described in the embodiment described above, all or a part of the processes described as being performed automatically can be performed manually, or all or a part of the processes described as being performed manually can be performed automatically by a known method. Moreover, the processing procedure, specific name, and information including various data and parameters illustrated in the document described above and the drawings can be arbitrarily changed unless otherwise specified. For example, the various types of information illustrated in each drawing are not limited to the illustrated information.

In addition, each of the components in each device illustrated in the drawings is functionally conceptual, and is not necessarily physically configured as illustrated in the drawings. That is, a specific form of distribution and integration of each device is not limited to the illustrated form, and all or a part thereof can be functionally or physically distributed and integrated in an arbitrary unit according to various loads, usage conditions, and the like. Note that this configuration may be distributed and integrated dynamically.

In addition, the above-described embodiments can be appropriately combined in a region in which the processing contents do not contradict each other.

Furthermore, for example, the present embodiment can be implemented as any configuration constituting an device or a system, such as a processor as a system large scale integration (LSI) or the like, a module using a plurality of the processors or the like, a unit using a plurality of the modules or the like, a set obtained by further adding other functions to the unit (that is, a configuration of a part of the device), or the like.

Note that, in the present embodiment, the system means a set of a plurality of components (devices, modules (parts), and the like), and it does not matter whether all the components are in one housing. Therefore, a plurality of devices housed in separate housings and connected via a network and one device in which a plurality of modules is housed in one housing are both systems.

### <<5. Conclusion>>

As described above, the antenna device 10 of the present embodiment includes the antenna 11a used for communication in the first frequency band (for example, LTE B1), and the antenna 11b arranged close to the antenna 11a and used for communication in the second frequency band (for example, Bluetooth/Wi-Fi 2.4 GHz band). The antenna matching circuit 12 having a low Q value and an antenna duplexer 13/filter 14 having a high Q value are connected to a subsequent stage of each of two antennas 11. In the present embodiment, the line 15 is provided between the antenna matching circuit 12 and the antenna duplexer 13/filter 14.

In the present embodiment, by adjusting the length of the line 15, the impedance of the counterpart band at a feeding point of the own antenna is increased. By adjusting the line length, the impedance of the counterpart band at the feeding point of the own antenna can be increased. Therefore, interference between the antennas is suppressed, so that deterioration of antenna characteristics is alleviated. As a result, the antenna device 10 can exhibit high antenna performance (for example, a high antenna gain, a high directional characteristic, a low noise level, or the like).

Although the embodiments of the present disclosure have been described above, the technical scope of the present disclosure is not limited to each of the above-described embodiments as it is, and various modifications can be made without departing from the gist of the present disclosure. In addition, components of different embodiments and modifications may be appropriately combined.

Furthermore, the effects of each embodiment described in the present specification are merely examples and are not limited, and other effects may be provided.

Note that the present technology can also have the following configurations.
(1) An antenna device comprising:
   a first antenna used for communication in a first frequency band;
   a second antenna that is arranged close to the first antenna and used for communication in a second frequency band;
   a first line that is directly or indirectly connected to the first antenna and increases an impedance of the second frequency band at a feeding point of the first antenna more than an impedance of the first frequency band at a feeding point of the first antenna; and
   a first antenna duplexer or a first filter connected to the first antenna via the first line.
(2) The antenna device according to (1), further comprising
   a first antenna matching circuit connected to the first antenna and having a Q value lower than a Q value of the first antenna duplexer or the first filter, wherein
   the first line is connected to the first antenna via the first antenna matching circuit.
(3) The antenna device according to (1) or (2), wherein
   the first line is a line having a length that makes the impedance of the second frequency band at the feeding point of the first antenna four times or more the impedance of the first frequency band at the feeding point of the first antenna.
(4) The antenna device according to (3), wherein
   the first line is a line having a length that makes the impedance of the second frequency band at the feeding point of the first antenna six times or more the impedance of the first frequency band at the feeding point of the first antenna.
(5) The antenna device according to any one of (1) to (4), wherein
   the first line is a line having a length of -100% to +200% of a 1/4 wavelength of a radio wave in the second frequency band.
(6) The antenna device according to any one of (1) to (5), wherein
   the first line is a stripline, a microstripline, a coaxial cable, or a flexible cable.
(7) The antenna device according to any one of (1) to (5), wherein
   the first filter is a SAW filter, a BAW filter, or a dielectric filter.
(8) The antenna device according to any one of (1) to (7), further comprising:
   a second line that is directly or indirectly connected to the second antenna and increases the impedance of the first frequency band at the feeding point of the first antenna; and
   a second antenna duplexer or a second filter connected to the second antenna via the second line.
(9) The antenna device according to (8), further comprising
   a second antenna matching circuit connected to the second antenna and having a Q value lower than a Q value of the second antenna duplexer or the second filter, wherein
   the second line is connected to the second antenna via the second antenna matching circuit.
(10) The antenna device according to (8) or (9), wherein
   the second line is a line having a length that makes the impedance of the first frequency band at the feeding point of the second antenna four times or more the impedance of the second frequency band at the feeding point of the second antenna.
(11) The antenna device according to (10), wherein
   the second line is a line having a length that makes the impedance of the first frequency band at the feeding point of the second antenna six times or more the impedance of the second frequency band at the feeding point of the second antenna.
(12) The antenna device according to any one of (8) to (11), wherein
   the second line is a line having a length of -100% to +200% of a 1/4 wavelength of a radio wave in the second frequency band.
(13) The antenna device according to any one of (8) to (12), wherein
   the second line is a stripline, a microstripline, a coaxial cable, or a flexible cable.
(14) The antenna device according to any one of (8) to (13), wherein
   the second filter is a SAW filter, a BAW filter, or a dielectric filter.
(15) The antenna device according to any one of (1) to (14), wherein
   the communication in the first frequency band and the communication in the second frequency band are communications of different communication schemes.
(16) The antenna device according to (15), wherein
   one of the communication in the first frequency band and the communication in the second frequency band is LTE or NR communication, and
   another one of the communication in the first frequency band and the communication in the second frequency band is Bluetooth or Wi-Fi communication.
(17) The antenna device according to any one of (1) to (16), wherein
   a difference between frequencies of the first frequency band and the second frequency band is within 1 GHz.
(18) The antenna device according to any one of (1) to (16), wherein
   one of the first frequency band and the second frequency band is a Bluetooth or Wi-Fi 2.4 GHz band, and
   another one of the first frequency band and the second frequency band is B1 or B7 of LTE.
(19) The antenna device according to any one of (1) to (16), wherein
   one of the first frequency band and the second frequency band is a Wi-Fi 5 GHz band, and
   another one of the first frequency band and the second frequency band is n79 or n96 of NR.
(20) A communication device comprising:
   a first antenna used for communication in a first frequency band;
   a second antenna that is arranged close to the first antenna and used for communication in a second frequency band;
   a first line that is directly or indirectly connected to the first antenna and increases an impedance of the second frequency band at a feeding point of the first antenna more than an impedance of the first frequency band at a feeding point of the first antenna; and
   a first antenna duplexer or a first filter connected to the first antenna via the first line.

### Reference Signs List

- 10: ANTENNA DEVICE
- 20: TERMINAL DEVICE
- 30: BASE STATION
- 11, 11a, 11b: ANTENNA
- 12, 12a, 12b: ANTENNA MATCHING CIRCUIT
- 13, 13a, 13b: ANTENNA DUPLEXER
- 14, 14a, 14b: FILTER
- 15, 15a, 15b: LINE
- 21, 31: RADIO COMMUNICATION UNIT
- 22, 32: STORAGE UNIT
- 23, 33: CONTROL UNIT

## Claims

1. An antenna device comprising:
a first antenna used for communication in a first frequency band;
a second antenna that is arranged close to the first antenna and used for communication in a second frequency band;
a first line that is directly or indirectly connected to the first antenna and increases an impedance of the second frequency band at a feeding point of the first antenna more than an impedance of the first frequency band at a feeding point of the first antenna; and
a first antenna duplexer or a first filter connected to the first antenna via the first line.

2. The antenna device according to claim 1, further comprising
a first antenna matching circuit connected to the first antenna and having a Q value lower than a Q value of the first antenna duplexer or the first filter, wherein
the first line is connected to the first antenna via the first antenna matching circuit.

3. The antenna device according to claim 1, wherein
the first line is a line having a length that makes the impedance of the second frequency band at the feeding point of the first antenna four times or more the impedance of the first frequency band at the feeding point of the first antenna.

4. The antenna device according to claim 3, wherein
the first line is a line having a length that makes the impedance of the second frequency band at the feeding point of the first antenna six times or more the impedance of the first frequency band at the feeding point of the first antenna.

5. The antenna device according to claim 1, wherein
the first line is a line having a length of -100% to +200% of a 1/4 wavelength of a radio wave in the second frequency band.

6. The antenna device according to claim 1, wherein
the first line is a stripline, a microstripline, a coaxial cable, or a flexible cable.

7. The antenna device according to claim 1, wherein
the first filter is a SAW filter, a BAW filter, or a dielectric filter.

8. The antenna device according to claim 1, further comprising:
a second line that is directly or indirectly connected to the second antenna and increases the impedance of the first frequency band at the feeding point of the first antenna; and
a second antenna duplexer or a second filter connected to the second antenna via the second line.

9. The antenna device according to claim 8, further comprising
a second antenna matching circuit connected to the second antenna and having a Q value lower than a Q value of the second antenna duplexer or the second filter, wherein
the second line is connected to the second antenna via the second antenna matching circuit.

10. The antenna device according to claim 8, wherein
the second line is a line having a length that makes the impedance of the first frequency band at the feeding point of the second antenna four times or more the impedance of the second frequency band at the feeding point of the second antenna.

11. The antenna device according to claim 10, wherein
the second line is a line having a length that makes the impedance of the first frequency band at the feeding point of the second antenna six times or more the impedance of the second frequency band at the feeding point of the second antenna.

12. The antenna device according to claim 8, wherein
the second line is a line having a length of -100% to +200% of a 1/4 wavelength of a radio wave in the second frequency band.

13. The antenna device according to claim 8, wherein
the second line is a stripline, a microstripline, a coaxial cable, or a flexible cable.

14. The antenna device according to claim 8, wherein
the second filter is a SAW filter, a BAW filter, or a dielectric filter.

15. The antenna device according to claim 1, wherein
the communication in the first frequency band and the communication in the second frequency band are communications of different communication schemes.

16. The antenna device according to claim 15, wherein
one of the communication in the first frequency band and the communication in the second frequency band is LTE or NR communication, and
another one of the communication in the first frequency band and the communication in the second frequency band is Bluetooth or Wi-Fi communication.

17. The antenna device according to claim 1, wherein
a difference between frequencies of the first frequency band and the second frequency band is within 1 GHz.

18. The antenna device according to claim 1, wherein
one of the first frequency band and the second frequency band is a Bluetooth or Wi-Fi 2.4 GHz band, and
another one of the first frequency band and the second frequency band is B1 or B7 of LTE.

19. The antenna device according to claim 1, wherein
one of the first frequency band and the second frequency band is a Wi-Fi 5 GHz band, and
another one of the first frequency band and the second frequency band is n79 or n96 of NR.

20. A communication device comprising:
a first antenna used for communication in a first frequency band;
a second antenna that is arranged close to the first antenna and used for communication in a second frequency band;
a first line that is directly or indirectly connected to the first antenna and increases an impedance of the second frequency band at a feeding point of the first antenna more than an impedance of the first frequency band at a feeding point of the first antenna; and
a first antenna duplexer or a first filter connected to the first antenna via the first line.
